# EUROPEAN PATENT SPECIFICATION

(11) **EP 0 391 003 B1**
(45) Date of publication and mention of the grant of the patent: **29.09.1993**
(21) Application number: 89313377.7
(22) Date of filing: 20.12.1989
(51) Int. Cl.: B29B 7/48, B29B 7/72

(54) **Continuous kneading machine**
Kontinuierliche Knetmaschine
Machine pour le malaxage en continu

(30) Priority: 04.04.1989 JP 86184/89
(43) Date of publication of application: 10.10.1990
(73) Proprietor: KABUSHIKI KAISHA KOBE SEIKO SHO, Kobe 651 (JP)
(72) Inventor: Fukui, Tsugushi, Kobe-shi Hyogo-ken (JP)
(74) Representative: Wright, Hugh Ronald

(56) References cited:
- EP-A- 0 064 882
- FR-A- 1 181 037
- GB-A- 2 048 092
- PATENT ABSTRACTS OF JAPAN, vol. 6, no. 40 (C-94)[918], 12th March 1982; & JP-A-56 158 135 (KOBE SEIKOSHO) 05-12-1981
- PATENT ABSTRACTS OF JAPAN, vol. 11, no. 146 (M-587)[2593], 13th May 1987; & JP-A-61 279 512 (KOBE STEEL) 10-12-1986
- PATENT ABSTRACTS OF JAPAN, vol. 7, no. 227 (M-248)[1372], 7th October 1983; & JP-A-58 119 808 (KOBE SEIKOSHO) 16-07-1983
- PATENT ABSTRACTS OF JAPAN, vol. 12, no. 424 (M-761)[3271], 10th November 1988; & JP-A-63 159 015 (KOBE STEEL) 01-07-1988

## Description

The present invention relates to a continuous kneading machine for continuously plasticizing and melting a plastic material such as plastics and rubber and kneading the same with additives, fillers, etc.

In a conventional continuous kneading machine for plastics for example, two rotors each having a kneading blade portion are arranged in parallel relationship to each other in a chamber having a supply hole and a discharge hole. A kneading material with additives, fillers, etc. is supplied from the supply hole, and is kneaded by the rotors. As being plasticized and molten, the kneaded material is discharged from the discharged hole.

In order to improve the quality of a kneaded product, there have been developed various kneading control devices for controlling a kneading degree, pressure or temperature during a kneading operation.

One of the prior art kneading control devices is disclosed in U.S. Patent No. 4,310,251 (which will be hereinafter referred to as a first technique). In the first technique, a gear pump for feeding a kneaded material to an after-treatment device is connected to a downstream side of the discharge hole of the chamber. A rotating speed of the gear pump is controlled by a variable motor to thereby control the pressure in a kneading portion, so that a filling degree of the material in the chamber may be changed to adjust the kneading degree.

However, the first technique has a problem such that since a pumping power of the rotors is small, an intrusion efficiency of the material into the teeth of the gear pump is reduced to cause hunting of the pressure in case of kneading a high-viscous resin in particular. As a result, a melting start point of the resin is fluctuated to render the operation unstable.

Such a problem of the first technique has been solved by a second technique wherein an amount of the material to be supplied to the supply hole is regulated to control the kneading degree and a third technique (see Japanese Patent Laid-open Publication No. 58-183210) wherein a fixed dam for obstructing an axial flow of the material is provided in the vicinity of the discharge hole to control the pressure and temperature.

However, the second technique has a problem such that although adverse effect to the kneading operation is reduced, the control effect is less exhibited, and the control response is late. On the other hand, the third technique has a problem such that although the control effect is exhibited to certain range of viscosity, it is hard to cope with high and low viscosity of the resin.

Further, an improved technique for solving the above problems is disclosed in U.S. Patent No. 4,681,457. Referring to Fig. 5 which schematically illustrates this improved technique in the prior art, a gear pump 7 is located downstream of a discharge hole 3 of a chamber 4, and a feeding device 6 is located upstream of a supply hole 2. Further, a movable dam 8′ is located in the vicinity of the discharge hole 3. An inlet pressure of the gear pump 7 is detected by a pressure sensor PIC, and a variable motor M4 for driving the gear pump 7 is so controlled as to stably operate the gear pump 7 according to an output from the pressure sensor PIC. A dam controller 14 receives constant feed conditions of the feeding device 6, a temperature in the discharge hole 3 as detected by a temperature sensor TIC, a rotating speed of a motor M2 for rotating a rotor 5, etc., and varies a shearing area in the chamber 4, a filling degree, etc., so that resin having a wide range of viscosity may be kneaded stably and effectively.

However, the improved technique yet has the following problem. That is, as the movable dam 8′ is opposed to a kneading blade portion B of the rotor 5 which portion is long in the axial direction of the rotor 5 but small in sectional area, a material blocking area by the movable dam 8′ is small to cause a less change in resin temperature or pressure in the discharge hole 3. On the contrary, the pressure or temperature of the material upon passing through the movable dam 8' is changed by the influence of the control of the gear pump 7, thus rendering the control of the movable dam 8' difficult or inaccurate. furthermore, as the rotor 5 itself cannot extrude the material in the vicinity of the discharge hole 3, defective intrusion of the high-viscous resin into the gear pump 7 is not still solved.

GB 2048092 described a continuous mixing machine for mixing a material fed at one end thereof and discharging the mixed material through a discharge orifice at another end in a continuous operation which comprises a plurality of rotors each provided with mixing blade means, a mixing chamber encircling said rotors and a throttle member as defining a part of said mixing chamber a ta position facing said blade means of rotors and adapted to be movable in a direction normal to the axes of said rotors toward and away from the rotors so as to vary the clearance between the throttle member and the outer surfaces of said rotors and, thereby, controlling the space within said mixing chamber.

### SUMMARY

We will describe apparatus which solves the various problems as mentioned above, and we will describe a continuous kneading machine which may suitably control the kneading degree to obtain a kneaded materials having a uniform quality. We will also describe a continuous kneading machine which may effect the control of the kneading operation precisely and readily without the influence from the kneading material discharging means. We will describe a continuous kneading machine which may ensure a stable operation over the total system from a material supplying stage through a kneading stage to a material discharging stage.

According to the present invention there is provided a continuous kneading machine comprising:
a chamber having a material inducing hole at one end and a material discharging hole at the other end;
a pair of rotors arranged in parallel relationship to each other in the chamber;
a sectionally circular rotor portion formed on each of the rotors; and a movable dam having an opposing edge opposed to and formed substantially along a circular edge of the sectionally circular rotor portions, the movable dam being adjustably approached to or retracted from the sectionally circular rotor portions; characterised in that;
each of the rotors has a first feeding blade portion, a kneading blade portion and a second feeding blade portion, these blade portions being formed along a longitudinal direction of the chamber in this order;
the sectionally circular rotor portion formed on each of the rotors is located between the kneading blade portion and the second feeding blade portion; and in that
the machine further comprises:
a gear pump connected to the material discharging hole; and means for measuring pressure or temperature in the chamber adjacent the junction of the kneading blade portion and the sectionally circular rotor portion and means for controlling the movable dam according to a value measured by said measuring means.

The material supplied from the material inducing hole by a feeding device is kneaded at the kneading portion in the chamber, and is subject to a shearing action to be plasticized and molten. The plasticized and molten material is fed to pass through the flow resistance applying means provided between the kneading portion and the material feeding portion for feeding the kneaded material to the material discharging hole formed at the downstream end of the chamber, and is fed to the material feeding portion. Then, the kneaded material is forcibly fed to the material discharging hole by the material feeding portion, and is discharged to an after-treatment device such as a pelletizer under a desired pressure by the material discharging means such as a gear pump or a screw extruder connected to the material discharging hole.

Flow resistance applying means, in the form of twin movable dams may be located between the kneading portion and the material feeding portion, and it serves to apply a substantially uniform flow resistance to the overall kneaded material flowing from the kneading portion to the material feeding portion. The flow resistance can be made variable by controlling the flow resistance applying means. Accordingly, the material existing in the kneading portion is subject to the flow resistance by the flow resistance applying means, with the result that the material resides in the kneading portion for a desired residence time and is subject to the kneading operation. More specifically, if the residence time is too long, the flow resistance is reduced to let the kneaded material readily flow to the material feeding portion, while if the residence time is too short, the flow resistance is increased to suppress the flow of the kneaded material to the material feeding portion. Thus, the kneading degree of the material can be controlled uniformly and stably.

The material discharging means such as a gear pump is isolated from the flow resistance applying means through the material feeding portion for forcibly feeding the kneaded material to the material discharging hole. Therefore, even when there is generated pressure fluctuation in the material discharging portion by the material discharging means, the kneading portion is not affected at all by such pressure fluctuation. Accordingly, the discharging means can be freely operated without affecting the kneading portion, thus ensuring a stable operation in a wide operational range.

Furthermore, a generation gas to be generated during the kneading operation can be readily removed from the material feeding portion, thereby suppressing an adverse effect of the gas to a series of operations inclusive of the induction and kneading of the material and ensuring the uniformity of the quality of the kneaded material.

The flow resistance applying means may be constructed of any mechanism which can apply a substantially uniform flow resistance to the kneaded material flowing at any portion around the rotors. This mechanism is preferably constructed of a movable dam, for example.

The movable dam has an opposing edge opposed to and formed substantially along an outer circumferential surface of a sectionally circular portion of each rotor. The movable dam is adjustably moved to let the opposing edge be approached to or retracted from the outer circumferential surface of the sectionally circular portion, so that a material passing area defined between the movable dam and the sectionally circular portion may be changed from substantially zero to a full open condition in the chamber. By changing the material passing area in this manner, the temperature, pressure and residence time of the kneaded material in the kneading portion is controlled.

Further, since the kneaded material is forcibly discharged from the material discharging hole by the material feeding portion, there is no possibility of defective intrusion of the material in the gear pump as the material discharging means. In addition, the control of the gear pump for supplying the material to the after-treatment device is isolated from the control of the movable dam by the material feeding portion, and does not affect the latter.

The material discharging means such as a gear pump may be controlled in such a manner that the pressure of the material in the material discharging hole is made substantially constant.

Other objects and features of the invention will be more fully understood from the following detailed description and appended claims when taken with the accompanying drawings.

### BRIEF DESCRIPTION OF THE DRAWINGS

Fig. 1 is a schematic illustration of the total system of the present invention;
Fig. 2 is a cross section taken along the line II-II in Fig. 1;
Fig. 3 is a cross section taken along the line III-III in Fig. 1;
Fig. 4 is a cross section taken along the line IV-IV in Fig. 1; and
Fig. 5 is a schematic illustration of the prior art system.

### DETAILED DESCRIPTION OF THE PREFERRED EMBODIMENT

There will now be described a preferred embodiment of the present invention with reference to the drawings.

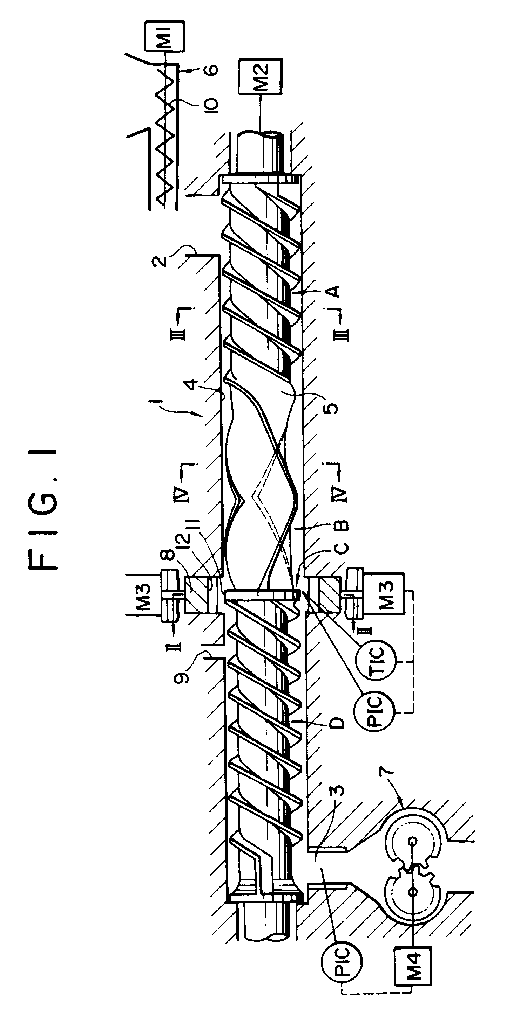

Referring to Figs. 1 to 4, a continuous kneading machine 1 includes a chamber 4 having a supply hole 2 and a discharge hole 3, a pair of rotors 5 arranged in parallel relationship to each other in the chamber 4, a feeding device 6 disposed upstream of the supply hole 2, a gear pump 7 disposed downstream of the discharge hole 3, and a pair of movable dams 8 disposed intermediate of the supply hole 2 and the discharge hole 3.

The feeding device 6 includes a feed screw 10 and a variable motor M1 for driving the feed screw 10. The feeding device 6 continuously supplies a predetermined amount of kneading material (e.g., plastic, rubber), additives, fillers, etc. to the supply hole 2.

The pair of rotors 5 have the same shape, and are juxtaposed to each other in meshing condition. The rotors 5 are designed to be synchronously rotated by a motor M2. Each of the rotors 5 is formed with a screw portion A, a kneading blade portion B, a sectionally circular portion C, and a feeding blade portion D. These portions A, B, C and D are formed in this order continuously from the upstream position on the supply hole 2 side to the downstream position on the discharge hole 3 side.

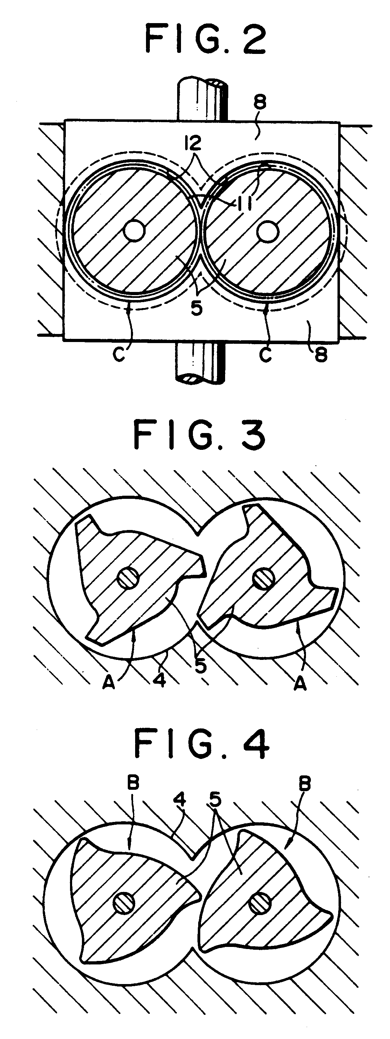

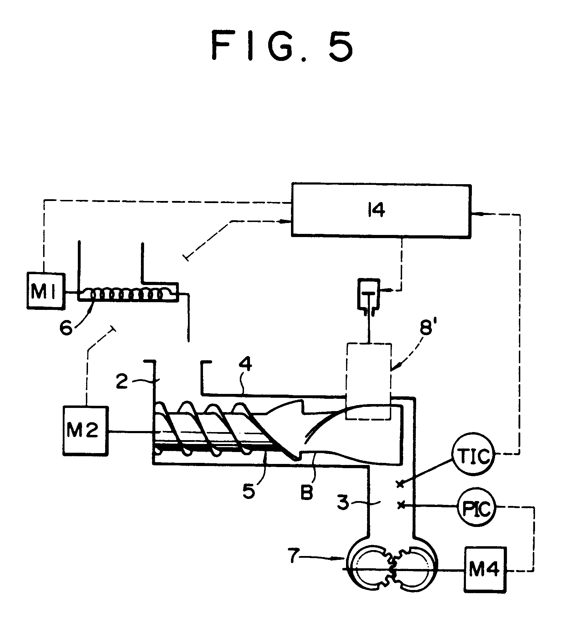

As shown in Figs. 3 and 4, the screw portion A and the kneading blade portion B have a substantially triangular cross-section, and function to feed and knead the material supplied from the supply hole 2. In the feeding and kneading operation, the material is plasticized and molten by the pressure and heat. At the time the material is fed to pass the sectionally circular portions C, the kneading operation has been almost completed. Accordingly, the feeding blade portion D primarily functions to urge the molten material to the discharge hole 3. The feeding blade portion D has substantially the same shape as the screw portion A.

The chamber 4 is formed with a vent 9 at a position opposed to the feeding blade portion D, so as to discharge a volatile matter generating from the molten material during the kneading portion. The vent 9 prevents feed inhibition to be generated by reverse flow of the volatile matter to the supply hole 2.

The pair of movable dams 8 are disposed above and below the sectionally circular portions C in opposed relationship thereto. An outer circumferential surface 11 of each sectionally circular portion C has a diameter slightly smaller than an inner diameter of the chamber 4, and each of the upper and lower movable dams 8 has an opposing edge 12 formed substantially along the outer circumferential surface 11 of the sectionally circular portions C.

That is, each opposing edge 12 is formed by laterally juxtaposing a pair of arcuate surfaces having a radius of curvature equal to or slightly greater than that of the outer circumferential surface 11. The upper and lower movable dams 8 are driven by respective motors M3 to adjustably approach and retract the upper and lower opposing edges 12 to and from the sectionally circular portions C.

Although the two motors M3 for synchronously moving the upper and lower movable dams 8 are shown, a single motor may be so provided as to move the dams 8 by the same amount through a rack-pinion mechanism or a screw jack mechanism.
Alternatively, the upper and lower movable dams 8 may be driven by a hydraulic cylinder.

As mentioned above, the vertical positions of the upper and lower movable dams 8 with respect to the sectionally circular portions C can be adjusted to thereby change a material passing area from substantially zero to a full open condition of the chamber 4. Thus, by restricting the material passing area, a flow resistance of the material may be increased to increase the temperature and the pressure of the material passing through this area.

The temperature and the pressure of the material passing through this area are measured by a temperature sensor TIC and a pressure sensor PIC, respectively. The motors M3 are controlled by the temperature sensor TIC and the pressure sensor PIC according to the result of measurements of the temperature and the pressure. Accordingly, a predetermined kneading degree of the material is not reached after measuring the temperature and the pressure, the motors M3 are operated to move the movable dams 8 and adjust the gate area between the dams 8 and the sectionally circular portions C, thereby controlling the kneading degree (a melting start point).

The gear pump 7 is driven by a motor M4 in the same manner as the prior art. That is, the pressure at a pump inlet is measured by a pressure sensor PIC, and the motor M4 is controlled by the pressure sensor PIC according to the result of measurement of the pressure, thereby regulating an amount of the kneaded material to be supplied to an after-treatment device.

This gear pump 7 is especially effective in feeding a high-viscous material which is hard to be supplied to the after-treatment device by the feeding blade portion D only. A pressure change due to the control of the gear pump 7 is not propagated to the material being kneaded by the kneading blade portion B since the kneaded material is forcibly fed by the feeding blade portion D. Accordingly, the control by the movable dams 8 is independent of the control by the gear pump 7.

As described above, since the movable dams 8 have the opposing edges 12 opposed to and formed substantially along the outer circumferential surfaces 11 of the sectionally circular portions C of the rotors 5, the material passing area between the rotors 5 and the movable dams 8 can be changed from substantially zero to the full open condition in the chamber 4. Accordingly, the flow resistance of the material can be changed to control the kneading degree and ensure effective control of the kneading operation. Furthermore, since each rotor 5 has the feeding blade portion D for forcibly feeding the kneaded material to the discharge hole 3, defective intrusion of the material at the gear pump 7 can be reduced. Further, the control by the gear pump 7 for smoothly supplying the kneaded material to the after-treatment device does not affect the control of the kneading operation by the movable dams 8. Accordingly, the kneading control can be precisely and readily carried out, and even when kneading a high-viscous material, the operation can be stably conducted.

While the invention has been described with reference to a specific embodiment, the description is illustrative and is not to be construed as limiting the scope of the invention. Various modifications and changes may occur to those skilled in the art without departing from the invention as defined by the appended claims.

## Claims

1. A continuous kneading machine (1) comprising:
a chamber (4) having a material inducing hole (2) at one end and a material discharging hole (3) at the other end;
a pair of rotors (5) arranged in parallel relationship to each other in the chamber;
a sectionally circular rotor portion (C) formed on each of the rotors; and
a movable dam (8) having an opposing edge (12) opposed to and formed substantially along a circular edge (11) of the sectionally circular rotor portions, the movable dam being adjustably approached to or retracted from the sectionally circular rotor portions; characterised in that;
each of the rotors has a first feeding blade portion (A), a kneading blade portion (B) and a second feeding blade portion (D), these blade portions being formed along a longitudinal direction of the chamber in this order;
the sectionally circular rotor portion (C) formed on each of the rotors is located between the kneading blade portion (B) and the second feeding blade portion (D); and in that
the machine (1) further comprises:
a gear pump (7) connected to the material discharging hole (3); and means for measuring pressure (PIC) or temperature (TIC) in the chamber adjacent the junction of the kneading blade portion (B) and the sectionally circular rotor portion (C), and means for controlling the movable dam according to a value measured by said measuring means.

2. The continuous kneading machine as defined in Claim 1 further comprising means (M3) for controlling an approaching or retracting operation of said movable dam.

3. The continuous kneading machine as defined in Claim 1 or Claim 2 further comprising means (9) provided at a portion of said chamber where said second feeding blade portion is disposed for venting a generation gas out of said machine.

4. The continuous kneading machine as defined in any one of Claims 1 to 3 further comprising means for controlling a rotating speed of said gear pump (M4).

## Patentansprüche

1. Kontinuierliche Knetmaschine (1) mit
einer Kammer (4) die eine Material-Einführöffnung (2) an einem Ende aufweist und an dem anderen Ende eine Material-Abführöffnung (3);
ein Paar Rotoren (5), die parallel zueinander in der Kammer (4) angeordnet sind;
einen im Querschnitt runden Rotorabschnitt (C), der an jedem der Rotoren ausgebildet ist; und
einer bewegbaren Sperre (8), die eine gegenüberliegende Kante (12) hat, die im wesentlichen entlang einem kreisförmigen Ende (11) des im Querschnitt runden Rotorabschnitt (C) ausgebildet ist und diesem gegenüberliegt, wobei die bewegbare Sperre (8) einstellbar dem im Querschnitt runden Rotorabschnitt (C) angenähert oder von diesem zurückgezogen wird, **dadurch gekennzeichnet, daß** jeder der Rotoren einen ersten fördernden Schneiden-Abschnitt (A) hat, einen knetenden Schneiden-Abschnitt (B) und einen zweiten fördernden Schneiden-Abschnitt (D), diese Schneiden-Abschnitte sind in dieser Reihenfolge entlang der Längsrichtung der Kammer ausgebildet;
wobei der im Querschnitt runde Rotorabschnitt (C), der an jedem der Rotoren ausgebildet ist, zwischen dem knetenden Schneiden-Abschnitt (B) und dem zweiten fördernden Schneiden-Abschnitt (D) angeordnet ist, und **dadurch, daß**
die Maschine weiterhin umfaßt, eine Zahnradpumpe (7), die mit der Material-Abführöffnung (3) verbunden ist; und eine Einrichtung zum Messen des Druckes (PIC) oder der Temperatur (TIC) in der Kammer, benachbart der Verbindung des knetenden Schneiden-Abschnitts (B) und des im Querschnitt runden
Rotorabschnitts (C), und eine Einrichtung zur Kontrolle der bewegbaren Sperre entsprechend dem von der Meßeinrichtung gemessenen Wert.

2. Kontinuierliche Knetmaschine gemäß Anspruch 1, die weiterhin Mittel (M3) zur Kontrolle der Annäherungs- oder Zurückzieh-Operation der bewegbaren Sperre umfaßt.

3. Kontinuierliche Knetmaschine gemäß Anspruch 1 oder 2, die weiterhin ein Einrichtung (9) umfaßt, die in einem Bereich der Kammer angeordnet ist, wo der zweite fördernde Schneiden-Abschnitt angeordnet ist, um entstandenes Gas aus der Maschine zu entlüften.

4. Kontinuierliche Knetmaschine gemäß einem der Ansprüche 1 bis 3, die weiterhin Mittel zur Kontrolle der Drehzahl der Zahnradpumpe (M4) umfaßt.

## Revendications

1. Machine pour le malaxage en continu (1) comportant:
une chambre (4) ayant un orifice d'amenée (2) de matière à une extrémité et un orifice de décharge (3) de matière à l'autre extrémité;
une paire de rotors (5) disposés parallèlement l'un à l'autre dans la chambre;
une portion de rotor à section circulaire (C) formée sur chaque rotor; et
un barrage mobile (8) ayant une face d'opposition (12) opposée à et formée substantiellement le long d'une face circulaire (11) des portions de rotor de section circulaire, le barrage mobile étant approché ou retiré de manière ajustable des portions de rotor de section circulaire; caractérisée en ce que
chaque rotor a une première portion à lame d'alimentation (A), une portion à lame de malaxage (B) et une deuxième portion à lame d'alimentation (D), ces portions à lame étant formées dans cet ordre suivant une direction longitudinale de la chambre;
la portion de rotor à section circulaire (C) formée sur chaque rotor est située entre la portion à lame de malaxage (B) et la deuxième portion à lame d'alimentation (D); et en ce que
la machine (1) comporte en outre:
une pompe à engrenages (7) connectée à l'orifice de décharge (3) de matière, et des moyens pour mesurer la pression (PIC) ou la température (TIC) dans la chambre au niveau de la jonction entre la portion à lame de malaxage (B) et la portion de rotor à section circulaire (C), et des moyens pour commander le barrage mobile en fonction d'une valeur mesurée par lesdits moyens de mesure.

2. Machine pour le malaxage en continu telle que défine dans la revendication 1, comportant en outre des moyens (M3) de contrôle d'une opération d'approche ou de retrait dudit barrage mobile.

3. Machine pour le malaxage en continu telle que définie dans la revendication 1 ou la revendication 2, comportant en outre des moyens (9) prévus à une portion de ladite chambre, à l'endroit où est disposée ladite deuxième portion à lame d'alimentation pour évacuer un gaz produit par aération hors de ladite machine.

4. Machine pour le malaxage en continu telle que définie dans l'une quelconque des revendications 1 à 3, comportant en outre des moyens de contrôle de la vitesse de rotation de ladite pompe à engrenages (M4).
